Europäisches Patentamt

European Patent Office

Office européen des brevets

(11) Veröffentlichungsnummer: **0 206 088 B1**

(12) **EUROPÄISCHE PATENTSCHRIFT**

(45) Veröffentlichungstag der Patentschrift: **02.09.92**

(51) Int. Cl.⁵: **G01N 25/18**

(21) Anmeldenummer: **86107864.0**

(22) Anmeldetag: **09.06.86**

(54) **Verfahren und Einrichtung zur Ermittlung des thermischen Widerstandes verschmutzter Wärmetauschelemente von wärmetechnischen Apparaten, insbesondere von Kraftwerkskondensatoren.**

(30) Priorität: **17.06.85 CH 2553/85**

(43) Veröffentlichungstag der Anmeldung:
**30.12.86 Patentblatt 86/52**

(45) Bekanntmachung des Hinweises auf die
Patenterteilung:
**02.09.92 Patentblatt 92/36**

(84) Benannte Vertragsstaaten:
**CH DE FR LI SE**

(56) Entgegenhaltungen:
**EP-A- 0 109 289**
**DE-A- 2 758 831**
**US-A- 3 918 300**

(73) Patentinhaber: **BBC Brown Boveri AG**
**Haselstrasse**
**CH-5401 Baden(CH)**

(72) Erfinder: **Blangetti, Francisco, Dr.**
**Lindenhof 10**
**CH-5430 Wettingen(CH)**
Erfinder: **Lang, Helmut**
**14 Groedyke Lane**
**Plainsboro N.J. 08536(US)**
Erfinder: **Müller, Reinhard, Dr.**
**Schartenstrasse 47**
**CH-5400 Baden(CH)**

**Beschreibung**

Die vorliegende Erfindung betrifft ein Verfahren und eine Einrichtung zur Ermittlung des thermischen Widerstands verschmutzter Wärmetauschelemente von wärmetechnischen Apparaten, insbesondere von Kraftwerkskondensatoren nach den Oberbegriffen der Patentansprüche 1 bzw. 3.

In wärmetechnischen Apparaten und insbesondere in Kraftwerkskondensatoren, für welche die vorliegende Erfindung in erster Linie gedacht ist, wird die Wärmedurchgangszahl bzw. dessen Kehrwert, der thermische Widerstand, an den Wärmetauscherflächen nach mehr oder weniger langer Betriebszeit durch die Bildung von Korrosionsprodukten und/oder mineralischen und organischen Ablagerungen aus dem Kühlwasser unter Umständen wesentlich verschlechtert.

Dem kann entgegengewirkt werden durch ein kontinuierlich arbeitendes Reinigungssystem und Zugabe von Korrosionsschutzadditiven ins Kühlwasser, wodurch sich an den Wärmetauscherflächen eine dünne, dauerhafte und gut haftende Schutzschicht ausbildet. Da diese natürlich ebenfalls den Wärmedurchgang verschlechtert, spricht man von ihr als von einer Schutz-/Schmutzschicht.

Um festzustellen, ob die Gesamtwärmedurchgangszahl noch den vom Hersteller gegebenen Garantiewerten entspricht, muss der thermische Widerstand dieser Schutz-/Schmutzschicht nach einer gewissen Betriebsdauer bei der Abnahme durch den Kunden festgestellt werden können. Ein Verfahren zur experimentellen Feststellung dieses thermischen Widerstandes ist in der ASME-Veröffentlichung PTC 12.2, Abschnitt 5, beschrieben. Dieses weit verbreitete Verfahren ist jedoch teuer, bedeutet eine längere Betriebsunterbrechung und ist von geringer Genauigkeit. Wo auf grössere Genauigkeit Wert gelegt wird, wendet man daher die Messung nach dieser Methode ungern an, da sie den Einfluss der für die Wärmedurchgangszahl massgeblichen Faktoren nicht zuverlässig zu erfassen gestattet. Dabei ist aber der thermische Widerstand der Schutz-/Schmutzschicht nur eine experimentell nicht bestätigte Annahme, mit der der Unterschied zwischen dem vorausberechneten und dem versuchsweise ermittelten thermischen Widerstand erklärt werden soll. Mit einem solchen Abnahmetest ist es nicht möglich, Anhaltspunkte für die Optimierung der Elemente und sonstigen Entwurfsdaten des Kondensators, wie Berohrung, Dampfströmungsgeschwindigkeit, Kühlwasserströmungsgeschwindigkeit usw., zu gewinnen.

Das Prinzip dieses Verfahrens nach ASME besteht im wesentlichen in folgendem: Nach Stillegung und Abkühlung des Kondensators wird aus je 2000 Rohren eines Rohrbündels ein Satz von z.B. sieben Rohren ausgewählt, bestehend aus einem mittleren Rohr und sechs äusseren Rohren, die das mittlere Rohr in Form eines Sechsecks umgeben. Von diesen Rohren wird das mittlere durch ein neues ersetzt, das den gleichen Neuzustand aufweist wie ihn die übrigen Rohre des Rohrbündels bei der Berohrung des Kondensators aufwiesen. Zum Ziehen des ersetzten mittleren Rohres und Einführen des neuen Rohres sind in den beiden Wasserkammern an den betreffenden Stellen Mannlockdeckel vorhanden. Die sieben zur Prüfung ausgewählten Rohre, d.h., das mittlere neue und die dasselbe umgebenden sechs alten Rohre, werden an ihren beiden Enden an Schläuche angeschlossen, die durch die Wasserkammern und die besagten Mannlöcher nach aussen geführt und an einen externen Kühlwasserstrom angeschlossen werden. Alle sieben Rohre werden vom Kühlwasser unter gleichen Bedingungen durchströmt und vom Dampf von gleichem Zustand umspült. Durch Messinstrumente für den Kühlwassermassenstrom und für die Ein- und Austrittstemperatur des Kühlwassers am Eintritt bzw. Austritt des Kühlwassers aus den ausgewählten sieben Rohren wird die mittlere Wärmedurchgangszahl der sechs äusseren Rohre und die Wärmedurchgangszahl des neuen Rohres ermittelt. Das Verhältnis dieser beiden Werte wird als Reinheitsfaktor bezeichnet. Man erhält für diesen Reinheitsfaktor einen einfachen rechnerischen Ausdruck, der jedoch den Fehler aufweist, dass in ihm die unbekannte Wärmeleitzahl der in den alten Rohren abgelagerten Schicht nicht enthalten ist. Das Verfahren ist daher zwar unzuverlässig, hat aber, wie erwähnt, trotzdem weite Verbreitung gefunden. Wo genauere Resultate gefordert werden, ist es aber nicht zuverlässig genug, so dass ein Bedürfnis nach einer genaueren Prüfmethode für die Ermittlung der Veränderung der Wärmedurchgangszahl eines Kondensators oder ähnlichen Apparates mit Wärmetauscherflächen besteht.

Mit der vorliegenden, in den Ansprüchen 1 und 3 definierten Erfindung soll diesem Bedürfnis entsprochen werden durch eine Methode und eine Einrichtung zu deren Durchführung, mit der die eingangs erwähnten Nachteile der ASME-Methode, insbesondere deren Ungenauigkeit, vermieden werden sollen.

Die Erfindung wird im folgenden unter Bezugnahme auf in der Zeichnung dargestellte Ausführungsbeispiele der erfindungsgemässen Einrichtung näher beschrieben.

In der Zeichnung stellen dar:

Fig. 1    das Schema einer erfindungsgemässen Einrichtung mit den zur Durchführung der Methode erforderlichen Hauptteilen,

Fig. 2    das Schema einer Absaugeanlage zur Erzeugung eines Vakuums als weitere Ausbildung der Anlage nach Fig. 1, und die

Fig. 3 ein Diagramm mit den für die erfindungsgemässe Methode massgeblichen Temperaturverläufen.

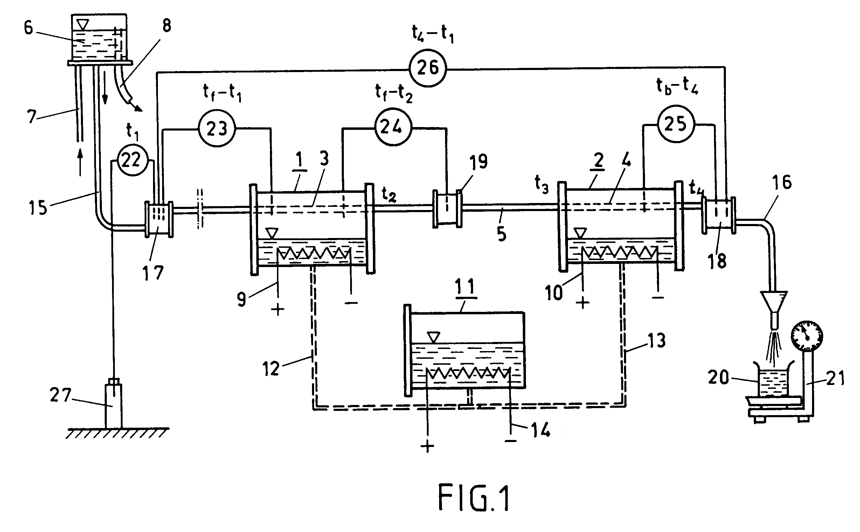

Die erfindungsgemässe Methode zur Ermittlung der Wärmedurchgangszahl bzw. des thermischen Widerstands eines verschmutzten Rohres beruht auf einem Vergleich der thermischen Widerstände von zwei Abschnitten desselben Rohres, von denen der eine Abschnitt im verschmutzten Zustand belassen und der zweite blank gebeizt wird, derart, dass der Belag aus Korrosion, Verschlammung u. dgl. vollständig entfernt wird, das Rohrmaterial aber voll erhalten bleibt. Die zwei zu untersuchenden Vergleichsrohrabschnitte 3 und 4 werden in zwei horizontalen Kondensatorkammern 1 und 2 gemäss Fig. 1 eingezogen. Die Vergleichsrohrabschnitte werden, abweichend von der ASME-Methode, aus nur einem einzigen unter je 2000 Rohren eines Rohrbündels gewonnen, indem dieses für die Prüfung ausgewählte Rohr in einem der beiden Wasserkästen jeweils so weit aus dem Rohrboden herausgezogen wird, wie es der Raum im Wasserkasten zulässt, und das herausgezogene Stück am Rohrboden abgetrennt wird. Dies geschieht ausschliesslich im Wasserkasten, da dieser gewöhnlich keine Mannlockdeckel aufweist, durch die das zu prüfende Rohr ins Freie gezogen werden könnte. Bei den üblichen Kondensatorgrössen erhält man auf diese Weise z.B. fünf Vergleichsrohrabschnitte von 1,20 bis 1,80 m Länge. Die Länge dieser Rohrabschnitte 3 und 4 bestimmt auch die Länge der thermisch möglichst gut isolierten Kondensatorkammern 1 und 2. Die in die Kammern 1 und 2 eingesetzten Rohrabschnitte 3 und 4 sind durch eine ebenfalls wärmeisolierte Verbindungsleitung 5 hintereinandergeschaltet. Die Rohrabschnitte 3 und 4 werden von Kühlwasser aus einem Vorratsbehälter 6 durchströmt, dessen Wasserspiegel und damit die statische Druckhöhe gegenüber der Höhenlage der Vergleichsrohrabschnitte durch Wasserzufuhr über eine Speiseleitung 7 und Ableiten des überschüssigen Wassers durch eine Ueberlaufleitung 8 konstant gehalten wird.

Der Dampf, der die Rohrabschnitte 3 und 4 umströmt und an deren Aussenfläche kondensiert, wird durch elektrische Heizelemente 9, 10 am Boden der Kondensatorkammern 1 bzw. 2 erzeugt. Das von den Rohrabschnitten 3 und 4 abtropfende Kondensat wird am Boden wieder verdampft usw.. Um das zum Verdampfen in den zwei Kammern 1 und 2 bestimmte Wasser zu entgasen, wird das Frischwasser, bevor es durch die zwei Heisswasserleitungen 12 und 13 in die Kammern 1 bzw. 2 gelangt, in einem Entgasungskessel 11 gekocht, was ebenfalls durch ein elektrisches Heizelement 14 geschieht.

Die Heizleistung in den drei Heizelementen 9, 10 und 14 wird durch Präzisionswattmeter gemessen und durch Regler bekannter Bauart in einem sehr engen Bereich konstant gehalten.

Die Einrichtung nach Fig. 1 hat sich aus einer Reihe untersuchter möglicher Konzeptionen mit einer und zwei Kondensatorkammern und verschiedenen Kühlwasserführungen als die bestgeeignete herauskristallisiert.

In der linken Kondensatorkammer 1 wird der verschmutzte Vergleichsrohrabschnitt 3 und in der rechten Kondensatorkammer 2 der blankgebeizte Vergleichsrohrabschnitt 4 eingespannt, wobei ihre Enden gegen den Dampfraum der Kondensatorkammern durch Rundschnurdichtungen abgedichtet sind, um das Eindringen von Luft zu verhindern.

Der Anfang des Rohrabschnittes 3 ist durch eine Kühlwasserzuleitung 15 mit dem Vorratsbehälter 6 und das Ende des Rohrabschnittes 4 mit einer Kühlwasserableitung 16 verbunden. Die zwei Rohrabschnitte werden während des Versuchs, aus dem Vorratsbehälter 6 gespeist, durch die Zuleitung 15 und über die Verbindungsleitung 5 in Serie durchströmt. Um auf die unten beschriebene Weise die Aenderung der Wärmedurchgangszahl des verschmutzten gegenüber dem blankgebeizten Rohrabschnitt feststellen zu können, ist im Kühlwasserleitungsstrang vor dem verschmutzten und nach dem blankgebeizten Rohrabschnitt je eine vordere, eine hintere und eine mittlere Messkammer 17 bzw. 18 und 19 vorgesehen, welche die zur Ermittlung des gesuchten thermischen Widerstands erforderlichen Daten liefern.

Das in die Versuchsapparate eintretende Kühlwasser hat Raumtemperatur, steht unter konstanter Druckhöhe und seine Strömungsgeschwindigkeit kann durch ein, beispielsweise in die vordere Messkammer 17 integriertes Ventil auf die in den Kondensatoren auftretenden Werte eingestellt werden. Die Wassertemperaturen $t_1$, $t_2$ und $t_4$ am Eintritt in den verschmutzten Rohrabschnitt 3 bzw. an dessen Austritt und am Austritt des blanken Rohrabschnitts 4 werden durch Thermoelemente gemessen. Wegen der guten Wärmeisolation der Verbindungsleitung 5 kann die Temperatur $t_3$ am Eingang des blanken Rohrabschnitts 4 gleich $t_2$ am Ausgang des Rohrabschnitts 3 angenommen werden. Der Kühlwassermassenstrom $\dot{M}_w$ wird durch Wägen des Wassergewichts bestimmt, das in einer mittels Stoppuhr festgestellten Zeitspanne in ein Messgefäss 20 auf einer Zeigerwaage 21 fliesst.

Für die Dampferzeugung wird destilliertes Wasser verwendet und die Verdampfung findet bei einem unter Atmosphärendruck liegenden Druck statt.

Für die Ermittlung des thermischen Widerstandes $R_f$ des verschmutzten Vergleichsrohrabschnitts 3, die am Schluss der Beschreibung gezeigt wird, werden neben noch zu erklärenden Grössen und dem erwähnten Kühlwassermassenstrom $\dot{M}_w$ die aus Fig. 1 ersichtlichen Temperaturen und Temperaturdifferenzen benötigt. Den Temperaturdifferenzanzeigern sind die Bezugszahlen 22 bis 26 zugeordnet. Sie zeigen die Differenzen der von Thermoelementen in den Messkammern 17, 18 und 19 abgenommenen Temperaturen an. Die Referenztemperatur 0°C, von der ausgehend die Temperatur $t_1$ gemessen wird, herrscht in einer Vergleichsmessstelle 27, die durch ein Eis/Wasser-Gemisch auf dem Gefrierpunkt des Wassers gehalten wird.

Der Entgasungskessel 11 ist gleichzeitig ein Vorratsbehälter, aus dem das auf die Siedetemperatur aufgeheizte destillierte Wasser in die Kondensatorkammern 1 und 2 gelangt, wo es durch die Heizelemente 9 bzw. 10 verdampft wird. Die zugeführten Wärmeströme $\dot{Q}_k$, die man zur Ermittlung des thermischen Widerstandes $R_f$ des verschmutzten Rohrabschnitts 3 kennen muss, können und werden zur Verbesserung der Messicherheit sowohl durch die den Heizelementen vorgeschalteten Präzisionswattmeter als auch durch Wägen der in einer gemessenen Zeitspanne ausgeflossenen Kühlwassermenge und Division derselben durch die Ausflusszeit sowie Multiplikation des so ermittelten Kühlwassermassenstroms $\dot{M}_w$ mit der Temperaturdifferenz $t_4$-$t_1$ und der spezifischen Wärme $c_{pw}$ bei konstantem Druck für Wasser ermittelt.

Die in Fig. 1 dargestellte Einrichtung weist die Elemente auf, die im wesentlichen zur Gewinnung der für die Ermittlung von $R_f$ erforderlichen Grössen ausreichen. Um aber siedendes Wasser aus dem Entgasungskessel 11 in die Kondensatorkammern 1 und 2 zu bringen, müsste im Kessel 11 ein Druck erzeugt werden, z.B. durch eine nicht dargestellte Pumpe.

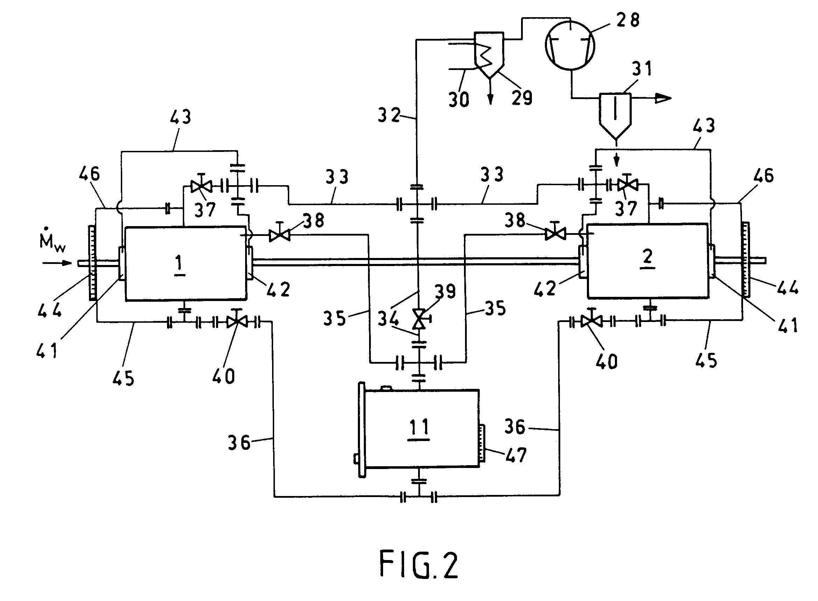

Ein solcher Druckerzeuger ist aber bei einer für die Bedürfnisse der Praxis besser ausgerüsteten Ausführung nach Fig. 2 mit einer Evakuierungseinrichtung für die Dampfräume der Kammern 1 und 2 und des Entgasungskessels 11 entbehrlich.

Zwecks besserer Uebersichtlichkeit sind in der Fig. 2 von den Elementen der in Fig. 1 dargestellten Einrichtung neben der Evakuierungseinrichtung nur die Kondensatorkammern 1 und 2 und der Entgasungskessel 11 gezeigt. Die Hauptteile der Evakuierungseinrichtung sind eine Vakuumpumpe 28, ein Wasserabscheider 29 vor der Pumpe 28 mit einer Kühlschlange 30, ein weiterer Wasserabscheider 31 nach der Pumpe 28, Evakuierungsleitungen 32, 33, 34, Ausgleichsleitungen 35 sowie Füllleitungen 36. In diesen Leitungen sind Ventile 37 bis 40 vorgesehen.

Bei Versuchsbeginn ist bei arbeitender Vakuumpumpe 28 das Ventil 39 geschlossen, die Ventile 37 sind offen, ebenso die Ventile 40. Durch das Vakuum in den Kammern 1 und 2 wird aus dem Entgasungskessel 11 durch die Füllleitungen 36 Wasser in die Kammern 1 und 2 gesaugt. Die Ausgleichsleitungen stellen sicher, dass in den beiden Kammern der gleiche Druck herrscht. Das Wasser im Entgasungskessel 11 und in den beiden Kammern 1 und 2 wird durch die elektrischen Heizelemente 14 bzw. 9 und 10 zum Kochen gebracht, um den Luftgehalt auszutreiben. Sobald bei durchfliessendem Kühlwasser ein stationärer Zustand erreicht ist, der sich durch Konstanz der an den Temperaturanzeigern 22 bis 26 abzulesenden Temperaturdifferenzen feststellen lässt, werden die Ventile 37, 38 und 39 geschlossen und es beginnt der Messvorgang. Die Vakuumpumpe bleibt aber währenddessen weiter im Betrieb, um an den Dichtgehäusen 41, 42 der Kammern 1 und 2 eventuell austretenden Leckdampf über Leckdampfleitungen 43 abzusaugen. An den äusseren Stirnseiten der Kammern 1 und 2 sind Wasserstandsanzeiger 44 vorgesehen, die über Verbindungsleitungen 45 und 46 mit dem Wasserraum bzw. Dampfraum der Kondensatorkammern 1 und 2 in leitender Verbindung stehen. Der Entgasungskessel 11 weist an einer Stirnseite ebenfalls einen Wasserstandsanzeiger 47 auf.

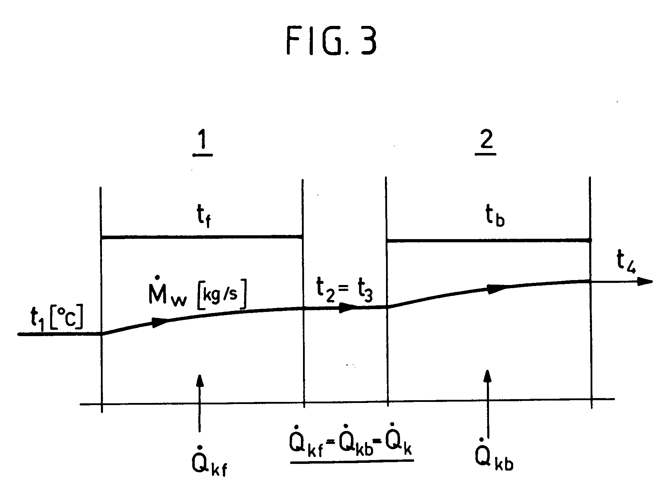

Unter Bezugnahme auf das in Fig. 3 dargestellte Diagramm, das den Temperaturverlauf im Kühlwasser und im Dampfraum der Kondensatorkammern 1 und 2 zeigt, wird im folgenden der Weg gezeigt, wie mit den in der Einrichtung gemessenen physikalischen Grössen der gesuchte Unterschied zwischen den thermischen Widerständen des verschmutzten und des blanken Vergleichsrohrabschnitts 3 bzw. 4 ermittelt werden kann. Es ist dabei zweckmässig, statt der Wärmedurchgangszahlen k deren Kehrwert R = 1/k, d.h., den thermischen Widerstand, zu benutzen.

Der thermische Widerstand $R_f$ der Ablagerung im verschmutzten Rohr ist gleich dem Unterschied zwischen dem thermischen Widerstand 1/k des verschmutzten Rohrabschnittes 3 und dem thermischen Widerstand 1/$k_b$ des blankgebeizten Rohrabschnitts 4, ausgedrückt durch die Gleichung:

$$R_f = 1/k - 1/k_b \, .$$

Unter der Voraussetzung, dass die Kühlwasserströmungsgeschwindigkeit, die an die Vergleichsrohrabschnitte 3 und 4 übergehenden Wärmeströme und die Wärmeübergangsflächen = Aussenflächen der Rohrabschnitte in beiden Kondensatorkammern 1 und 2 gleich sind, können für die an die beiden Vergleichsrohrabschnitte 3 und 4 übergehenden Wärmeströme $\dot{Q}_k$ die folgenden Ausdrücke aufgestellt werden:

$$\dot{Q}_k = kA(t_2-t_1)/\ln[(t_f-t_1)/(t_f-t_2)]$$

und

$$\dot{Q}_k = k_b A(t_4 - t_3)/\ln[(t_b - t_3)/(t_b - t_4)],$$

wobei $t_2 = t_3$ angenommen wird und sich die Indizes f und b auf den verschmutzten bzw. blankgebeizten Vergleichsrohrabschnitt beziehen. Die übrigen Grössen, soweit nicht schon früher definiert, bedeuten: A = Wärmeübergangsfläche = Aussenfläche der Rohrabschnitte in $m^2$, $t_f$ = Dampftemperatur in °C in der Kondensatorkammer 1 für den verschmutzten Rohrabschnitt 3, $t_b$ das gleiche für den blanken Rohrabschnitt 4 in der Kondensatorkammer 2, und ln den natürlichen Logarithmus.

Wegen der gleichen dampfbeströmten Längen L und Aussendurchmesser $d_a$ der Vergleichsrohrabschnitte 3, 4 und damit gleicher Kondensationsflächen sowie gleicher Wärmeströme in den beiden Kondensatorkammern 1 und 2 erhält man, indem k und $k_b$ in der Gleichung für $R_f$ durch die aus den beiden Gleichungen für $\dot{Q}_k$ gewonnenen Ausdrücke für k und $k_b$ substituiert werden, die Gleichung:

$$R_f = \pi d_a L/\dot{Q}_k \cdot [(t_2 - t_1)/\ln\{(t_f - t_1)/(t_f - t_2)\} - - (t_4 - t_2)/\ln\{(t_b - t_2)/(t_b - t_4)\}].$$

$R_f$ lässt sich also aus den gemessenen Temperaturen bzw. Temperaturdifferenzen, der dampfbeströmten Länge und dem Aussendurchmesser der beiden Vergleichsrohrabschnitte und dem zugeführten Wärmestrom leicht bestimmen.

Nimmt man die spezifische Wärme bei konstantem Druck, cpw, des Kühlwassers als konstant an, so lässt sich mit $\dot{M}_w$, der wie eingangs beschrieben durch Wägen der in einem gemessenen Zeitraum ausgeflossenen Wassermenge ermittelt werden kann, der Ausdruck für $R_f$ so schreiben

$$R_f = \pi d_a L/\dot{M}_w c_{pw} \cdot [1/\ln\{(t_f - t_1)/(t_f - t_2)\} - - 1/\ln\{(t_b - t_2)/(t_b - t_4)\}].$$

Es ist also nicht notwendig, $\dot{Q}_k$ zu messen, sondern es genügt die genaue Messung von $\dot{M}_w$, die mit einfacheren Mitteln durchzuführen ist.

Das so für den Vergleichsrohrabschnitt 3 erhaltene $R_f$ wird nun mit dem gleichen blankgebeizten Vergleichsrohrabschnitt 4 in gleicher Weise für einige der restlichen Rohrabschnitte des gezogenen Kondensatorrohres bestimmt und aus den erhaltenen $R_f$-Werten der Mittelwert bestimmt. In der Regel genügt es, neben dem ersten Rohrabschnitt 3 drei weitere verschmutzte Rohrabschnitte zu untersuchen.

Für alle weiteren unter je 2000 Kondensatorrohren gezogenen Rohre wird die beschriebene Prozedur wiederholt und aus der Summe der so gefundenen Mittelwerte als gesuchtes Schlussergebnis ein resultierender Mittelwert $R_{fres}$ des Kondensators oder eines sonstigen wärmetechnischen Apparates mit Wärmetauscherflächen gebildet.

Zum Unterschied von der eingangs erwähnten ASME-Methode garantiert die erfindungsgemässe Methode für die beiden Rohrabschnitte 3 und 4 gleiche Kühlwassergeschwindigkeiten und praktisch gleiche Reynoldszahlen der Kühlwasserströmung sowie gleiche Kondensatbelastung in den beiden Kondensatorkammern. Letzteres ist besonders wichtig, um auf der Aussenfläche der Rohrabschnitte 3 und 4 gleiche Wärmeübergangszahlen $\alpha_F$ für den Kondensatfilm zu erhalten. Nach Nusselt gilt für laminare Kondensatschichten ohne Scherspannungen in der Grenzschicht die folgende Proportionalität: $\alpha_F \sim \dot{M}_F^{-1/3} \sim \dot{Q}_k^{-1/3}$, d.h. mit anderen Worten, dass gleiche Wärmeströme $\dot{Q}_k$ auch angenähert gleiche Werte von $\alpha_F$ zur Folge haben. Um möglichst gleiche Temperaturen in beiden Kondensatorkammern zu erhalten und Aenderungen der Bezugstemperatur für die Berechnung der thermischen Eigenschaften des Kondensatfilms möglichst gering zu halten, ist der blankgebeizte Rohrabschnitt 4, in der Durchströmungsrichtung gesehen, nach dem verschmutzten Rohrabschnitt angeordnet.

Das Diagramm nach Fig. 3 zeigt den Verlauf der Dampftemperatur $t_f$ und $t_b$ der Kühlwassertemperaturen $t_1$ bis $t_4$ in den Kondensatorkammern 1 bzw. 2 sowie vor, zwischen und hinter den beiden Kondensatorkammern, denen die gleichen Wärmeströme $\dot{Q}_{kf} = \dot{Q}_{kb} = \dot{Q}_k$ zugeführt werden.

Ein weiterer Vorteil der erfindungsgemässen Methode besteht darin, dass die Messung der Dampftemperatur unmittelbar an den Rohrabschnitten 3 und 4 in quasi ruhendem Dampf erfolgt, was bei der erwähnten ASME-Methode nicht der Fall ist.

Die beiden Vergleichsrohrabschnitte 3 und 4 könnten auch in umgekehrter Reihenfolge vom Kühlwasser durchflossen werden, doch würden sich bei dieser Anordnung die Sattdampftemperaturen in den beiden Kondensatorkammern 1 und 2 stärker unterscheiden mit der Folge, dass die Gleichheit der Wärmeübergangszahlen $\alpha_F$ der Kondensatfilme auf den beiden Vergleichsrohrabschnitten 3 und 4 und damit die Messgenauigkeit nicht mehr gewährleistet wären.

**Patentansprüche**

1. Verfahren zur Ermittlung des thermischen Widerstandes ($R_f$) von in rohrförmigen Wärmetauschelementen (3) von wärmetechnischen Apparaten, insbesondere von Kraftwerkskondensatoren, durch eine Kühlflüssigkeit verursachten Korrosionsschichten und/oder sonstigen mineralischen oder organischen Ablagerungen, welche Wärmetauschelemente (3) von besagter Kühlflüssigkeit durchströmt und von einem flüssigen, gas- oder dampfförmigen Medium umströmt werden, wobei die Kühlflüssigkeit einen Teil der Wärme des genannten Mediums aufnimmt und abführt, welches Verfahren darauf beruht, dass der thermische Widerstand $(R_f)$ aus der Differenz des thermischen Widerstandes des verschmutzten Wärmetauschelements und des thermischen Widerstandes $(R_b)$ eines gleichen Wärmetauschelements (4) von neuwertiger Beschaffenheit ermittelt wird, indem die verschmutzten Wärmetauschelemente (3) und das neuwertige Wärmetauschelement (4) unter zumindest angenähert gleichen thermodynamischen und strömungsmechanischen Bedingungen wie im wärmetechnischen Apparat durchströmt und umströmt werden und durch Messung die Kühlflüssigkeitsein- und -austrittstemperaturen $(t_1, t_3$ bzw. $t_2, t_4)$, der Kühlflüssigkeitsmassenstrom $(\dot{M}_w)$, die Temperaturen $(t_f$ bzw. $t_b)$ des die Wärmetauschelemente (3; 4) umströmenden Mediums sowie die auf die Wärmetauschelemente (3; 4) übergehenden Wärmeströme $(\dot{Q}_{kf}$ bzw. $\dot{Q}_{kb})$ ermittelt werden und mit diesen Werten aus bekannten thermodynamischen Gesetzmässigkeiten die erwähnte Differenz $(R_f)$ der thermischen Widerstände der beiden Wärmetauschelemente (3 bzw. 4) berechnet wird, dadurch gekennzeichnet, dass nur je ein verschmutztes und ein neuwertiges Wärmetauschelement (3 bzw. 4) für die Messung der genannten Grössen verwendet wird, und dass die zu untersuchenden Wärmetauschelemente (3; 4) von der Kühlflüssigkeit nacheinander in der Reihenfolge: Verschmutztes Wärmetauschelement (3)-- Neuwertiges Wärmetauschelement (4) durchströmt werden.

2. Verfahren nach Anspruch 1, angewandt auf die Ermittlung des thermischen Widerstandes $(R_f)$ der Ablagerungen eines im praktischen Betrieb eines Kraftwerkskondensators verschmutzten Kondensatorrohres, dadurch gekennzeichnet, dass aus den Kondensatorrohrbündeln aus je einer gleichen Anzahl von Kondensatorrohren ein einziges Rohr für die Untersuchung gezogen und innerhalb des Wasserkastens in gleich lange Vergleichsrohrabschnitte (3; 4) unterteilt wird, deren Länge durch die Platzverhältnisse im Wasserkasten bestimmt ist, dass einer (4) dieser Vergleichsrohrabschnitte von den Ablagerungen befreit und so gereinigt wird, dass er oberflächlich den ursprünglichen Zustand aufweist, dass einer (3) der übrigen verschmutzten Vergleichsrohrabschnitte mit dem gereinigten Vergleichsrohrabschnitt (4) in Reihe hintereinander leitend verbunden wird, dass die Vergleichsrohrabschnitte (3; 4) in der Reihenfolge (3) - (4) von Kühlwasser durchströmt werden, dass dabei den beiden Vergleichsrohrabschnitten (3; 4) gleichzeitig und unabhängig voneinander durch Dampf gleiche Wärmeströme $(\dot{Q}_{kf} = \dot{Q}_{kb} = \dot{Q}_k)$ zugeführt werden, dass dabei die stationären Werte der Kühlwasserein- und -austrittstemperaturen $(t_1, t_2)$ am verschmutzten Vergleichsrohrabschnitt (3) sowie $(t_3, t_4)$ am gereinigten Vergleichsrohrabschnitt (4), der Kühlwassermassenstrom $(\dot{M}_w)$, die Dampftemperaturen $(t_f; t_b)$ an den beiden Vergleichsrohrabschnitten (3; 4) und die diesen zugeführten Wärmeströme $(\dot{Q}_{kf} = \dot{Q}_{kb} = \dot{Q}_k)$ gemessen werden, und dass mit diesen Messwerten der thermische Widerstand $(R_f)$ der Ablagerung am verschmutzten Vergleichsrohrabschnitt (3) durch folgenden Rechnungsgang gewonnen wird: Aus $R_f = 1/k - 1/k_b$, worin $k$ und $k_b$ die Wärmedurchgangszahlen des verschmutzten (3) bzw. des gereinigten (4) Vergleichsrohrabschnittes bedeuten, und

$$\dot{Q}_k = kA(t_2-t_1)/\ln[(t_f-t_1)/(t_f-t_2)]$$

und

$$\dot{Q}_k = k_b A(t_4-t_3)/\ln[(t_b-t_3)/(t_b-t_4)],$$

wobei $t_2 = t_3$ angenommen ist und sich die Indizes f und b auf den verschmutzten bzw. gereinigten Vergleichsrohrabschnitt (3; 4) beziehen und $A$ = Aussenfläche und $d_a$ = Aussendurchmesser der Vergleichsrohrabschnitte bedeuten, ergibt sich

$$R_f = \pi d_a L/\dot{Q}_k \cdot [(t_2-t_1)/\ln\{(t_f-t_1)/(t_f-t_2)\} - - (t_4-t_2)/\ln\{(t_b-t_2)/(t_b-t_4)\}]$$

oder mit dem leichter messbaren Kühlwassermassenstrom $\dot{M}_w$ und der als konstant angenommenen spezifischen Wärme $c_{pw}$ für Wasser:

$$R_f = \pi d_a L/\dot{M}_w c_{pw} \cdot [1/\ln\{(t_f-t_1)/(t_f-t_2)\} - - 1/\ln\{(t_b-t_2)/(t_b-t_4)\}].$$

3. Einrichtung zur Durchführung des Verfahrens nach Anspruch 1, zur Ermittlung des thermischen Widerstands $(R_f)$ von Ablagerungen in einem Kondensatorrohr, wobei gemäss Anspruch 2 zwei aus dem gleichen Kondensatorrohr gewonnene, gleichlange Vergleichsrohrabschnitte (3; 4) im verschmutzten bzw. gereinigten Zustand untersucht werden, gekennzeichnet durch die folgenden Hauptteile:

- Zwei elektrisch beheizbare Kondensatorkammern (1; 2) zur Aufnahme des verschmutzten (3) bzw. gereinigten (4) Vergleichsrohrabschnitts,
- einen mit den Kondensatorkammern (1; 2) über Heisswasserleitungen (12, 13) kommunizierenden, elektrisch beheizbaren Entgasungskessel (11),
- einen Kühlwasservorratsbehälter (6), der durch eine Kühlwasserzuleitung (15) mit der ersten Kondensatorkammer (1) verbunden ist und an ihrer Einmündung in die Kammer (1) ein Dichtgehäuse (41) zur leckfreien Aufnahme des einen Endes des verschmutzten Vergleichsrohrabschnittes (3) aufweist,
- eine Verbindungsleitung (5) zwischen der ersten und der zweiten Kondensatorkammer (1 bzw. 2) mit Dichtgehäusen (42) an ihren Einmündungen in die beiden Kammern (1; 2) zur Aufnahme je eines Endes des verschmutzten bzw. gereinigten Vergleichsrohrabschnitts (3; 4),
- eine Kühlwasserableitung (16) nach der zweiten Kondensatorkammer (2) mit einem Dichtgehäuse (41) an ihrem Austritt aus der Kammer (2) zur Aufnahme eines Endes des gereinigten Vergleichsrohrabschnitts (4),
- eine Messeinrichtung (20, 21 + Stoppuhr) am Ende der Kühlwasserableitung (16) zur Messung des Kühlwassermassenstroms ($\dot{M}_w$),
- Messkammern (17; 18; 19) in der Kühlwasserzuleitung (15) bzw. in der Kühlwasserableitung (16) und in der Verbindungsleitung (5) mit Thermoelementen zur Messung der in den genannten Leitungen herrschenden stationären Kühlwassertemperaturen,
- Thermoelemente in den Dampfräumen zur Messung der Temperaturen ($t_f$; $t_b$) in den Dampfräumen der Kondensatorkammern (1; 2),
- Temperaturdifferenzanzeiger (22 bis 26) zur Anzeige der Temperaturdifferenzen zwischen zwei aufeinanderfolgenden Messstellen im Kühlwasserstrom bzw. in den Dampfräumen der Kondensatorkammern (1; 2),
- Präzisionswattmeter für die elektrischen Heizelemente der Kondensatorkammern (1; 2) zur Messung des in dieselben übergehenden Wärmestromes ($\dot{Q}_{kf}$ = = $\dot{Q}_{kb}$ = $\dot{Q}_k$), sowie
- eine Regeleinrichtung zur Konstanthaltung dieser Wärmeströme.

4. Einrichtung nach Anspruch 3, gekennzeichnet durch eine Evakuierungseinrichtung zum Evakuieren der Dampfräume in den beiden Kondensatorkammern (1; 2) und im Entgasungskessel (11), mit den folgenden Hauptteilen:

- einer Vakuumpumpe (28) mit vor- und nachgeschaltetem Wasserabscheider (29 + 30; 31),
- untereinander kommunizierenden Evakuierungsleitungen (32, 33; 34) zur leitenden Verbindung der Vakuumpumpe (28) mit den Dampfräumen der beiden Kondensatorkammern (1; 2) und des Entgasungskessel (11),
- je einem Ventil (37; 39) in den Evakuierungsleitungen (33 bzw. 34) vor deren Einmündung in die beiden Kondensatorkammern (1; 2) und in den Entgasungskessel (11),
- mit der Evakuierungsleitung (32) kommunizierende Ausgleichsleitungen (35), welche die Dampfräume der beiden Kondensatorkammern (1; 2) miteinander leitend verbinden und vor ihren Einmündungen in dieselben je ein Ventil (38) aufweisen,
- je einem Ventil (40) vor der Einmündung der Füllleitungen (36; 12, 13), welche den Entgasungskessel (11) mit den Kondensatorkammern (1; 2) verbinden, in die letzteren,
- mit den Evakuierungsleitungen (33) kommunizierende Leckdampfleitungen (43), welche die jeweils zwei Dichtgehäuse (41, 42) der beiden Kondensatorkammern (1; 2) leitend miteinander verbinden und zur Absaugung eventueller Dampfleckströme aus den Dichtgehäusen (41, 42) dienen, sowie mit
- Wasserstandsanzeigern (44; 47) an den Kondensatorkammern (1; 2) bzw. am Entgasungskessel (11).

**Claims**

1. Process for the determination of the thermal resistance ($R_f$) of corrosion layers and/or other mineral or organic deposits, which are caused in tubular heat exchange elements (3) of thermodynamic apparatuses, in particular of power station condensers, by a cooling liquid, through which heat exchange elements (3) the said cooling liquid flows and around which a medium in the form of a liquid, a gas or a vapour flows, the cooling liquid absorbing and conducting away a part of the heat of the said medium, which process is based on the fact that the thermal resistance ($R_f$) is determined from the difference of the thermal resistance of the contaminated heat exchange element and of the thermal resistance ($R_b$) of a similar heat exchange element (4) in condition as new, in that flow takes place through and around the contaminated heat exchange elements (3) and the heat exchange element (4) as new under at least approximately the same thermodynamic and rheological conditions as in the thermodynamic apparatus, and by measurement of the cooling liquid inlet and outlet temperatures ($t_1$, $t_3$ and $t_2$, $t_4$ respectively), the mass flow of the cooling liquid ($\dot{M}_w$), the temperatures ($t_f$ or $t_b$) of the medium flowing around the heat exchange elements (3; 4) as well as the heat flows ($\dot{Q}_{kf}$ or $\dot{Q}_{kb}$) passing to the heat exchange elements (3; 4) are determined, and by means of these values on the basis of known thermodynamic laws the said difference ($R_f$) of the thermal resistances of the two heat exchange elements (3 and 4 respectively) is calculated, characterised in that only one contaminated heat exchange element and one heat exchange element in condition as new (3 and 4 respectively) are used for the measurement of the said quantities in each case, and in that the cooling liquid flows through the heat exchange elements (3; 4) to be investigated, in succession in the sequence: contaminated heat exchange element (3) - heat exchange element (4) in condition as new.

2. Process according to Claim 1, applied to the determination of the thermal resistance ($R_f$) of the deposits of a condenser tube contaminated in the practical operation of a power station condenser, characterised in that from the condenser tube bundles of in each instance an equal number of condenser tubes a single tube is drawn for investigation and subdivided within the water chamber into equally long comparison tube sections (3; 4), the length of which is determined by the spatial conditions in the water chamber, in that one (4) of these comparison tube sections is freed from the deposits and cleaned in such a manner that it shows the original surface condition, in that one (3) of the remaining contaminated comparison tube sections is conductively connected in series to the cleaned comparison tube section (4), in that cooling water flows through the comparison tube sections (3; 4) in the sequence (3) - (4), in that, in this procedure, equal heat flows ($\dot{Q}_{kf}$ = $\dot{Q}_{kb}$ = $\dot{Q}_k$) are supplied to the two comparison tube sections (3; 4) simultaneously and independently of one another by means of steam, in that, in this procedure, the steady values of the cooling water inlet and outlet

temperatures ($t_1$, $t_2$) at the contaminated comparison tube section (3) as well as ($t_3$, $t_4$) at the cleaned comparison tube section (4), the mass flow of the cooling water ($\dot{M}_w$), the steam temperatures ($t_f$; $t_b$) at the two comparison tube sections (3; 4) and the heat flows ($\dot{Q}_{kf}$ = $\dot{Q}_{kb}$ = $\dot{Q}_k$) supplied to the latter are measured, and in that, by means of these measured values, the thermal resistance ($R_f$) of the deposit at the contaminated comparison tube section (3) is obtained by means of the following sequence of calculations: from $R_f$ = $1/k-1/k_b$, wherein $k$ and $k_b$ represent the coefficients of heat transmission of the contaminated (3) and of the cleaned (4) comparison tube section respectively,
and

$$\dot{Q}_k = kA(t_2-t_1)/\ln[(t_f-t_1)/(t_f-r_2)]$$

and

$$\dot{Q}_k = k_bA(t_4-t_3)/\ln[_b-t_3)/(t_b-t_4)],$$

where $t_2$ = $t_3$ is assumed and the subscripts f and b relate to the contaminated and to the cleaned comparison tube sections (3; 4) respectively and A = external surface area and $d_a$ = external diameter of the comparison tube sections, the following is obtained:

$$R_f = \pi d_a\ L/\dot{Q}_k \cdot [(t_2-t_1)/\ln\ \{(t_f-t_1)/(t_f-t_2)\}-- (t_4-t_2)/\ln\ \{(t_b-t_2)/(t_b-t_4)\}]$$

or, with the more readily measurable mass flow of cooling water, $\dot{M}_w$ and the specific heat $c_{pw}$ for water assumed to be constant:

$$R_f = \pi d_a\ L/\dot{M}_w\ c_{pw} \cdot [1/\ln\ \{(t_f-t_1)/(t_f-t)\} - - 1/\ln\ \{(t_b-t_2)/(t_b-t_4)\}].$$

3. Device for carrying out the process according to Claim 1, for the determination of the thermal resistance ($R_f$) of deposits in a condenser tube, in accordance with Claim 2 two equally long comparison tube sections (3; 4) obtained from the same condenser tube, being investigated in the contaminated and cleaned condition respectively, which device is characterised by the following principal components:
Two electrically heatable condenser chambers (1; 2) to receive the contaminated (3) and the cleaned (4) comparison tube section respectively,
An electrically heatable degassing vessel (11) communicating with the condenser chambers (1; 2) via hot water ducts (12, 13),
A cooling water reservoir (6), which is connected by means of a cooling water supply duct (15) to the first condenser chamber (1) and at its place of discharge into the chamber (1) exhibits a sealing housing (41) for the leak-free reception of one of the ends of the contaminated comparison tube section (3),

A connecting duct (5) between the first and the second condenser chamber (1 and 2 respectively) with sealing housings (42) at its positions of discharge into the chambers (1; 2) to receive in each instance a respective end of the contaminated or cleaned comparison tube section (3; 4),

A cooling water exhaust duct (16) after the second condenser chamber (2) with a sealing housing (41) at its outlet from the chamber (2) to receive an end of the cleaned comparison tube section (4),

A measuring device (20, 21 + stopwatch) at the end of the cooling water exhaust duct (16) for the measurement of the mass flow of cooling water ($\dot{M}_w$), Measurement chambers (17; 18; 19) in the cooling water supply duct (15) or in the cooling water exhaust duct (16) and in the connecting duct (5) with thermo-elements for the measurement of the steady cooling water temperatures prevailing in the said ducts,

Thermo-elements in the steam spaces for the measurement of the temperatures ($t_f$; $t_b$) in the steam spaces of the condenser chambers (1; 2),

Temperature difference indicators (22 to 26) for the indication of the temperature differences between two successive measurement positions in the cooling water stream or in the steam spaces off the condenser chambers (1; 2),

Precision wattmeters for the electrical heating elements of the condenser chambers (1; 2) for the measurement of the heat flow ($\dot{Q}_{kf}$ = $\dot{Q}_{kb}$ = $\dot{Q}_k$) passing into the latter, and

A regulating device to maintain these heat flows constant.

4. Device according to Claim 3, characterised by an evacuation device for the evacuation of the steam spaces in the two condenser chambers (1; 2) and in the degassing vessel (11), having the following principal components:

A vacuum pump (28) with water separators (29 + 30; 31) connected before and after the same,

Mutually communicating evacuation ducts (32, 33; 34) for the conductive connection of the vacuum pump (28) with the steam spaces of the two condenser chambers (1; 2) and of the degassing vessel (11),

Respective valves (37; 39) in the evacuation ducts (33 and 34 respectively) before their place of discharge into the two condenser chambers (1; 2) and into the degassing vessel (11),

Compensating ducts (35), which communicate with the evacuation duct (32) and which conductively connect the steam spaces of the two condenser chambers (1; 2) to one another and exhibit respective values (38) before their places of discharge into the same,

Respective valves (40) before the place of discharge of the filling ducts (36; 12, 13), which connect the degassing vessel (11) to the condenser chambers (1; 2), into the latter,

Leakage steam ducts (43), which communicate with the evacuation ducts (33) and which conductively connect the two sealing housings in each case (41, 42) of the two condenser chambers (1; 2) to one another and serve for the drawing-off of any possible steam leakage currents from the sealing housings (41, 42), as well as with

Water level indicators (44; 47) at the condenser chambers (1; 2) and at the degassing vessel (11) respectively.

## Revendications

1. Procédé pour déterminer la résistance thermique ($R_f$) de couches de corrosion et/ou de divers dépôts minéraux ou organiques provoqués par un liquide de refroidissement dans des éléments tubulaires d'échange de chaleur (3) d'appareils de la technique thermique, en particulier de condenseurs de centrales thermiques, éléments d'échange de chaleur (3) qui sont parcourus par ledit liquide de refroidissement et qui sont plongés dans un fluide liquide, gazeux ou vaporeux, dans lequel le liquide de refroidissement prélève et évacue une partie de la chaleur dudit fluide, procédé qui est basé sur le fait que l'on détermine la résistance thermique ($R_f$) à partir de la différence entre la résistance thermique de l'élément d'échange de chaleur encrassé et la résistance thermique ($R_b$) d'un même élément d'échange de chaleur (4) à l'état rénové, où les éléments d'échange de chaleur encrassés (3) et l'élément d'échange de chaleur rénové (4) sont parcourus et enveloppés dans des conditions thermodynamiques et d'écoulement des fluides au moins à peu près identiques à celles de l'appareil de la technique thermique, on détermine par la mesure les températures d'entrée et de sortie ($t_1$, $t_3$ respectivement $t_2$, $t_4$) du liquide de refroidissement, le débit massique ($\dot{M}_w$) du liquide de refroidissement, les températures ($t_f$ respectivement $t_b$) du fluide enveloppant les éléments d'échange de chaleur (3; 4) ainsi que les flux thermiques ( $\dot{Q}_{kf}$ respectivement $\dot{Q}_{kb}$ ) transférés aux éléments d'échange de chaleur (3; 4) et on calcule à partir de ces valeurs, par des lois thermodynamiques connues, la différence précitée ($R_f$) entre la résistance thermique des deux éléments d'échange de chaleur (3, respectivement 4), caractérisé en ce que seuls un élément d'échange de chaleur encrassé (3) et un élément d'échange de chaleur rénové (4) sont utilisés pour la mesure desdites grandeurs, et en ce que les éléments d'échange de chaleur à examiner (3; 4) sont parcourus par le liquide de refroidissement l'un après l'autre dans l'ordre: élément d'échange de chaleur encrassé (3) - élément d'échange de chaleur rénové (4).

2. Procédé suivant la revendication 1, appliqué à la détermination de la résistance thermique ($R_f$) des dépôts d'un tube de condenseur encrassé lors du fonctionnement pratique d'un condenseur de centrale thermique, caractérisé en ce que, dans les faisceaux de tubes de condenseur et pour un même nombre de tubes de condenseur, on extrait un seul tube pour le contrôle et on le divise à l'intérieur de la chambre à eau en tronçons de tube de comparaison (3; 4) de même longueur, dont la longueur est déterminée par les conditions de place dans la chambre à eau, en ce qu'un (4) de ces tronçons de tube de comparaison est débarrassé des dépôts et est nettoyé de telle façon qu'il présente en surface son état initial, en ce qu'un (3) des autres tronçons de tube de comparaison encrassés est raccordé en série, l'un derrière l'autre, avec le tronçon de tube de comparaison nettoyé (4), en ce que les deux tronçons de tube de comparaison (3; 4) sont parcourus par l'eau de refroidissement dans l'ordre (3) - (4), en ce que l'on fournit au moyen de la vapeur des flux thermiques identiques ( $\dot{Q}_{kf} = \dot{Q}_{kb} = \dot{Q}_k$ ) aux deux tronçons de tube de comparaison (3; 4) simultanément et indépendamment l'un de l'autre, en ce que l'on mesure alors les valeurs stationnaires des températures d'entrée et de sortie de l'eau de refroidissement ($t_1$, $t_2$) dans le tronçon de tube de comparaison encrassé (3) ainsi que ($t_3$, $t_4$) dans le tronçon de tube de comparaison nettoyé (4), le débit massique ( $\dot{M}_w$ ) de l'eau de refroidissement, les températures de la vapeur ($t_f$; $t_b$) aux deux tronçons de tube de comparaison (3; 4) et les flux thermiques ( $\dot{Q}_{kf} = \dot{Q}_{kb} = \dot{Q}_k$ ) fournis à ceux-ci, et en ce que l'on obtient à partir de ces valeurs mesurées la résistance thermique ($R_f$) du dépôt sur le tronçon de tube de comparaison encrassé (3) par le calcul suivant: Partant de $R_f = 1/k - 1/k_b$, où $k$ et $k_b$ représentent respectivement les coefficients de transfert thermique du tronçon de tube de comparaison encrassé (3) et nettoyé (4), et de

$$\dot{Q}_k = kA(t_2 - t_1)/\ln[(t_f - t_1)/(t_f - t_2)]$$

et

$$\dot{Q}_k = k_bA(t_4 - t_3)/\ln[(t_b - t_3)/(t_b - t_4)],$$

où l'on admet que $t_2 = t_3$ et où les indices f et b se rapportent respectivement au tronçon de tube de comparaison encrassé et nettoyé (3; 4) et A = surface extérieure et $d_a$ = diamètre extérieur des tronçons de tube de comparaison, on obtient:

$$R_f = \pi.d_a.L/\dot{Q}_k .[(t_2 - t_1)/\ln\{(t_f - t_1)/(t_f - t_2)\} - - (t_4 - t_2)/\ln\{(t_b - t_2)/(t_b - t_4)\}]$$

ou, avec le débit massique $\dot{M}_w$, de l'eau de refroidissement, plus aisément mesurable, et en considérant comme constante la chaleur spécifique $c_{pw}$ de l'eau:

$$R_f = \pi.d_2.L/\dot{M}_w .c_{pw}.[1/\ln\{(t_f - t_1)/(t_f - t_2)\} - - 1/\ln((t_b - t_2)/(t_b - t_4))]].$$

3. Dispositif pour la mise en oeuvre du procédé suivant la revendication 1, pour déterminer la résistance thermique ($R_f$) de dépôts dans un tube de condenseur, dans lequel, suivant la revendication 2, on examine deux tronçons de tube de comparaison de même longueur (3; 4) tirés d'un même tube de condenseur, à l'état encrassé respectivement nettoyé, caractérisé par les pièces principales suivantes:

- deux chambres de condenseur (1; 2) à chauffage électrique pour recevoir les tronçons de tube de comparaison encrassé (3) respectivement nettoyé (4);
- une chaudière de dégazage (11) à chauffage électrique, communiquant avec les chambres de condenseur (1; 2) par des conduites d'eau chaude (12, 13);
- un réservoir de stockage de l'eau de refroidissement (6), qui est raccordé à la première chambre de condenseur (1) par une conduite d'entrée d'eau de refroidissement (15) et qui présente à son embouchure dans la chambre (1) un boîtier étanche (41) pour recevoir sans fuites une première extrémité du tronçon de tube de comparaison nettoyé (3),
- une conduite de liaison (5) entre la première et la seconde chambre de condenseur (1, respectivement 2) avec des boîtiers étanches (42) à leurs embouchures dans les deux chambres (1; 2) pour recevoir chacun une extrémité du tronçon de tube de comparaison encrassé (3) respectivement nettoyé (4);

- une conduite d'évacuation de l'eau de refroidissement (16) après la seconde chambre de condenseur (2) avec un boîtier étanche (41) à sa sortie de la chambre (2) pour recevoir une extrémité du tronçon de tube de comparaison nettoyé (4);

- un dispositif de mesure (20, 21 + chronomètre) à l'extrémité de la conduite d'évacuation de l'eau de refroidissement (16) pour la mesure du débit de l'eau de refroidissement ($\dot{M}_w$);

- des chambres de mesure (17; 18; 19) dans la conduite d'entrée de l'eau de refroidissement (15) respectivement dans la conduite d'évacuation de l'eau de refroidissement (16) et dans la conduite de liaison (5) avec des thermo-éléments pour la mesure des températures stationnaires de l'eau de refroidissement régnant dans lesdites conduites;

- des thermo-éléments dans les enceintes de vapeur pour la mesure des températures ($t_f$; $t_b$) dans les enceintes de vapeur des chambres de condenseur (1; 2);

- des indicateurs de différence de température (22 à 26) pour l'indication des différences de température entre deux points de mesure successifs dans le courant d'eau de refroidissement respectivement dans les enceintes de vapeur des chambres de condenseur (1; 2);

- des wattmètres de précision pour les éléments chauffants électriques des chambres de condenseur (1; 2) pour la mesure du flux thermique ($\dot{Q}_{kf} = \dot{Q}_{kb} = \dot{Q}_k$) transféré dans celles-ci; ainsi que

- un dispositif de régulation pour maintenir constants ces flux thermiques.

4. Dispositif suivant la revendication 3, caractérisé par un dispositif de mise sous vide pour évacuer les enceintes de vapeur dans les deux chambres de condenseur (1; 2) et dans la chaudière de dégazage (11), avec les pièces principales suivantes:

- une pompe à vide (28) avec des séparateurs d'eau (29 + 30; 31) montés avant et après;

- des conduites d'évacuation (32, 33; 34) communiquant l'une avec l'autre pour le raccordement de la pompe à vide (28) avec les enceintes de vapeur des deux chambres de condenseur (1; 2) et de la chaudière de dégazage (11);

- une vanne (37; 39) dans chacune des conduites d'évacuation (33 respectivement 34) avant leur embouchure dans les deux chambres de condenseur (1; 2) et dans la chaudière de dégazage (11);

- des conduites d'égalisation (35) communiquant avec la conduite d'évacuation (32), qui raccordent l'une à l'autre les enceintes de vapeur des deux chambres de condenseur (1; 2) et qui présentent chacune une vanne (38) avant leur embouchure dans celles-ci;

- une vanne (40) dans chacune des conduites de remplissage (36; 12, 13), qui raccordent la chaudière de dégazage (11) aux chambres de condenseur (1; 2), avant leur embouchure dans celles-ci;

- des conduites de vapeur de fuite (43) communiquant avec les conduites d'évacuation (33), qui relient deux à deux les boîtiers étanches (41, 42) des deux chambres de condenseur (1; 2) et servent à l'aspiration d'éventuels courants de vapeur de fuite hors des boîtiers étanches (41, 42); ainsi qu'avec

- des indicateurs de niveau d'eau (44; 47) aux chambres de condenseur (1; 2) respectivement à la chaudière de dégazage (11).

FIG.1

12

FIG.2

FIG. 3